(19) Europäisches Patentamt
European Patent Office
Office européen des brevets

(11) Veröffentlichungsnummer: **0 041 184**
**B1**

(12) **EUROPÄISCHE PATENTSCHRIFT**

(45) Veröffentlichungstag der Patentschrift: **16.05.84**

(51) Int. Cl.³: **G 02 F 1/133**

(21) Anmeldenummer: **81103896.7**

(22) Anmeldetag: **20.05.81**

(54) **Flüssigkristallanzeige (FKA) und Verfahren zu ihrer Herstellung.**

(30) Priorität: **30.05.80 DE 3020645**

(43) Veröffentlichungstag der Anmeldung: **09.12.81 Patentblatt 81/49**

(45) Bekanntmachung des Hinweises auf die Patenterteilung: **16.05.84 Patentblatt 84/20**

(84) Benannte Vertragsstaaten: **DE FR GB IT**

(56) Entgegenhaltungen:
**EP - A - 0 007 574**
**DE - A - 2 457 641**
**DE - A - 2 722 589**
**US - A - 4 101 207**

(73) Patentinhaber: **SIEMENS AKTIENGESELLSCHAFT, Berlin und München Wittelsbacherplatz 2, D-8000 München 2 (DE)**

(72) Erfinder: **Krüger, Hans, Dipl.-Phys., Peralohstrasse 13, D-8000 München 83 (DE)**
Erfinder: **Rubner, Roland, Dr., Dipl.-Chem., Buchenring 15, D-8551 Röttenbach (DE)**

**EP 0 041 184 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Flüssigkristallanzeige und Verfahren zu ihrer Herstellung

Die Erfindung betrifft eine Flüssigkristallanzeige gemäß dem Oberbegriff des Anspruchs 1. Ein solches Display, bei dem die Polymerschicht gerieben ist und plattenparallel ausrichtet, wird in der DE-A-2 548 925 beschrieben.

Bei fast allen Anzeigetypen müssen die Flüssigkristallmoleküle im ungeschalteten Zustand eine bestimmte Orientierung haben. Diese Ruhezustandstextur wird heutzutage in der Regel durch geeignet präparierte Orientierungsschichten auf den Trägerplatten erzeugt, wobei man inzwischen eine Reihe von Techniken entwickelt hat, mit denen sich praktisch jede beliebige Molekülausrichtung hervorrufen und auch über lange Betriebszeiten hinweg halten läßt. Angesichts dieses hohen Entwicklungsstandes ist es besonders unbefriedigend, daß es bisher noch nicht gelungen ist, die folgende Nebenwirkung zu unterdrücken: Eine Orientierungsschicht, die den Flüssigkristall einwandfrei vororientiert, verfügt im allgemeinen über eine derart große Ausrichtkraft, daß sie beim Anlegen der Schaltspannung die ihr benachbarten Flüssigkristallmoleküle daran hindert, in den neuen Ordnungszustand überzugehen. Es bleiben Randstörungen zurück, die die optischen Qualitäten verschlechtern (schwächerer Bildkontrast, eingeschränkter Betrachtungswinkelbereich) und die Anzahl der möglichen Multiplexschritte begrenzen, da die Spannungs-Kontrast-Kennlinie in ihrem Übergangsbereich abgeflacht wird. Natürlich könnte man versuchen, die Texturfehler durch höhere Schaltspannungen abzubauen. Spannungserhöhungen vergrößern jedoch den Ansteueraufwand und sind überdies bei dynamischer Adressierung nur in sehr engen Grenzen möglich, da bei einem Multiplexbetrieb die effektive Ein-Spannung mit der effektiven Aus-Spannung verknüpft ist und beide Spannungen stets den Übergangsbereich der Spannungs-Kontrast-Kennlinie einfassen müssen.

Der Erfindung liegt daher die Aufgabe zugrunde, für eine Flüssigkristallanzeige ein Orientierungsmittel zu schaffen, das einerseits für eine saubere Ausgangstextur sorgt und andererseits den Orientierungszustand des eingeschalteten Flüssigkristalls nicht stört. Diese Aufgabe wird erfindungsgemäß durch ein Display mit den Merkmalen des Patentanspruchs 1 gelöst.

Flüssigkristalline Polymere sind an sich bereits bekannt; vergl. hierzu Makromol. Chem. 180 (1979) 803, mit weiteren Nachweisen. Man weiß auch schon, daß sich die Moleküle dieser Verbindungen durch äußere elektrische Felder umorientieren lassen und daß die verschiedenen Orientierungszustände durch Abkühlen des Polymers eingefroren werden können (EP-A-7 547, DE-A-2 722 589 und DE-A-2 831 909); an eine Verwendung als schaltbare Orientierungsschicht hatte man noch nicht gedacht. Daneben gab es auch schon relativ früh Überlegungen, eine (verkippt) homöotrop orientierende Schicht aus festen smektischen Kristallen zu bilden (DE-B-2 315 541). Ein solcher Überzug ist allerdings kein Polymerisat und läßt sich im übrigen auch nicht schalten.

Die erfindungsgemäß vorgesehene Orientierungsschicht zeichnet sich dadurch aus, daß sie ihre Ausrichtwirkung an den Schaltzustand des Flüssigkristalls anpaßt, derart, daß sie im Aus-Zustand — wie eine herkömmliche Orientierungsschicht — selbst die gewünschte Textur besorgt und im Ein-Zustand die neue Molekülausrichtung nicht nur nicht beeinträchtigt sondern sogar noch fördert. Daß die Polymerschicht beim Umschalten zu träge reagiert und deshalb nicht in der Lage sein könnte, die beschriebenen Zustandswechsel rechtzeitig zu vollziehen, ist nicht zu befürchten. Zwar wurden bei den bisher untersuchten Flüssigkristallpolymeren Schaltzeiten im Bereich von Sekunden gemessen. Im vorliegenden Fall wird jedoch der Schaltvorgang wesentlich schneller abgeschlossen sein. Denn die Orientierungsschicht wechselt bereits dann ihre Ausrichtwirkung, wenn lediglich ihre orientierenden Bestandteile umklappen, und diese Teile — es sind die mit den Flüssigkristallmolekülen in direktem Kontakt stehenden mesogenen Einheiten an der Schichtoberfläche — drehen sich ähnlich schnell wie das sie umgebende Flüssigkristallmedium.

Das Polymer enthält in der Regel Hauptketten, an denen über flexible Brücken mesogene Seitenketten angesetzt sind. Während die Hauptketten nach einer statistischen Verteilung orientiert sind, bilden die Seitenketten, die in ihrer Ausrichtung von der Lage der Hauptketten praktisch nicht beeinflußt werden, eine flüssigkristalline Phase aus. Die Schicht könnte aber auch durch direkte Polymerisation der mit den mesogenen Einheiten versehenen flexiblen Brücken erzeugt werden. In jedem Fall ist die wirksame Schicht extrem dünn und kann im Extremfall monomolekular sein.

Es hat sich gezeigt, daß der Kippwinkel, den die Orientierungsschicht den Flüssigkristallmolekülen gibt, vor allem davon abhängt, wie dicht die mesogenen Einheiten angeordnet sind. Stehen sie relativ eng beieinander, so ragen sie senkrecht in die Flüssigkristallschicht hinein und führen zu einer (verkippt) plattensenkrechten Orientierung; haben sie dagegen einen großen Abstand voneinander, so legen sie sich in die Plattenebene und bewirken dementsprechend eine (verkippt) homogene Textur. Dabei erhalten die plattenparallel ausgerichteten Flüssigkristallmoleküle eine einheitliche Vorzugsrichtung, wenn man die Orientierungsschicht mit einem gerichteten Verfahren, etwa einer Tauchtechnik oder dem sog. »Roller-Coating«-Verfahren, aufträgt.

Die Polymerschicht kann so auf die Flüssigkristallschicht abgestimmt werden, daß sie entweder zuerst schaltet oder dem Flüssigkristall folgt. Ausführungsbeispiele, bei denen diese beiden Schaltvarianten besonders vorteilhaft sind, werden in den Ansprüchen 2 bis 4 beschrieben. Im übrigen könnte man auch einen Flüssigkristall verwenden, der nicht unter Einfluß des Feldes schaltet sondern durch die

schaltende Polymerschicht mitgenommen wird. In diesem Fall braucht das Display zum Einschalten und Ausschalten etwa den gleichen Zeitraum, der ungefähr den bisher gewohnten Ausschaltzeiten entspricht. Im Vergleich zu herkömmlichen Anzeigetypen ist damit die Einschaltzeit bei statischer Ansteuerung ungünstiger, wird jedoch durchaus attraktiv, wenn man multiplext.

Unter Umständen kann es sinnvoll sein, die Polymerschicht auch noch als einen schaltbaren Polarisator arbeiten zu lassen. Dabei empfiehlt sich vor allem eine Ausgestaltung, bei der das Polymer im ausgeschalteten Zustand linear polarisiert und im Ein-Zustand durchtretendes Licht ungeschwächt passieren läßt. Denn in vielen Fällen wird der Polarisator nur in einem der beiden Schaltzustände benötigt und wirkt im anderen Schaltzustand lediglich als ein unnötig licht- und kontrastdämpfendes Element. Eine konkrete Ausführungsform, bei der die Vorzüge einer Polymerschicht mit schaltbarem Orientier- und Polarisationsvermögen besonders zur Geltung kommen, wird in Anspruch 7 charakterisiert.

Weitere vorteilhafte Ausgestaltungen und Weiterbildungen der Erfindung sind Gegenstand zusätzlicher Ansprüche.

Der Lösungsvorschlag soll nun anhand bevorzugter Ausführungsbeispiele in Verbindung mit der beiliegenden Zeichnung näher erläutert werden. In den Figuren sind einander entsprechende Teile mit gleichen Bezugszeichen versehen. Es zeigen:

Fig. 1 in einem Seitenschnitt ein erstes Ausführungsbeispiel und

Fig. 2 in der gleichen Darstellungsweise ein abgewandeltes Ausführungsbeispiel.

Die Figuren sind der Übersicht halber schematisch gehalten. Für ein Verständnis der Erfindung nicht unbedingt erforderliche Displayteile, etwa elektrische Zuleitungen, sind nicht eingezeichnet.

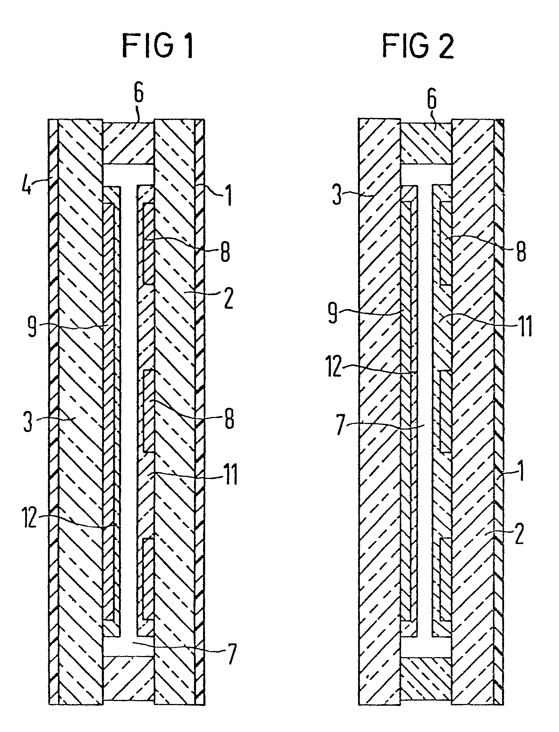

Bei der Flüssigkristallanzeige der Fig. 1 handelt es sich um eine transmissiv betriebene Sieben-Segment-Ziffern-Anzeige. Das Display enthält im einzelnen einen vorderen Linearpolarisator 1, eine vordere Trägerplatte 2, eine hintere Trägerplatte 3 sowie einen hinteren Linearpolarisator 4. Die beiden Trägerplatten sind über einen Rahmen 6 miteinander verbunden. Die vom Rahmen und den beiden Substraten gebildete Kammer ist mit einer Flüssigkristallschicht 7 gefüllt. Die Platten 2 und 3 tragen auf ihren einander zugewandten Flächen jeweils leitfähige Beläge (Vorderelektrode aus einzeln ansteuerbaren Segmentelektroden 8, durchgehende Rückelektrode 9) und darüber schaltbare Polymerschichten 11, 12, die die Flüssigkristallschicht 7 orientieren.

Welche Orientierungs- und Schalteigenschaften die Polymerschichten haben, hängt davon ab, mit welchem elektrooptischen Effekt die Anzeigevorrichtung arbeitet und wo der Schwerpunkt der Verbesserungen liegen soll. Aus der Vielzahl der Möglichkeiten werden die folgenden vier Beispiele herausgegriffen.

## Anwendungsbeispiel 1

Das Display wird als Drehzelle betrieben, d. h. die Flüssigkristallschicht ist im Ruhezustand einheitlich plattenparallel, mit einer 90°-Verdrillung in Richtung der Plattennormalen, ausgerichtet und geht bei Anlegen der Schaltspannung in eine plattensenkrechte Orientierung über. Der Flüssigkristall schaltet vor der Polymerschicht; beide Schichten sind also weich gekoppelt.

Die Anzeigevorrichtung hat im Vergleich zu einer herkömmlichen Drehzelle vor allem einen höheren Bildkontrast, kann aus schrägen Richtungen abgelesen werden und weist bessere Multiplexeigenschaften auf.

## Anwendungsbeispiel 2

Die Flüssigkristallanzeige arbeitet als inverse Drehzelle, bei der die Flüssigkristallmoleküle im Ruhezustand (verkippt) homöotrop orientiert sind und unter Einfluß eines E-Feldes eine plattenparallelverdrillte Textur annehmen. Die Polymerschicht schaltet später als der Flüssigkristall (weiche Kopplung). Es ergeben sich die gleichen Verbesserungen wie im Beispiel 1.

## Anwendungsbeispiel 3

Die Anzeige basiert auf dem sog. »Phase-Change«-Effekt. Sie hat einen cholesterischen Flüssigkristall, der im angeregten Zustand homöotrop nematisch ist. Die Polymerschicht orientiert im Aus-Zustand plattenparallel und im Ein-Zustand plattensenkrecht. Sie schaltet langsamer als die Flüssigkristallschicht. Dies hat zur Folge, daß im Spannungs-Kontrast-Diagramm eine Hysterese geschaffen wird. Sie ist noch breiter als die Hystereseschleife, die man bei homöotroper Randorientierung beobachtet hat (Appl. Phys. Lett. 25 (1974) 5). Solche Bistabilitätseffekte erlauben bekanntlich extrem hohe Multiplexverhältnisse.

Anwendungsbeispiel 4

Wie Beispiel 3, mit dem Unterschied, daß die Polymerschicht zuerst schaltet und die Flüssigkristallschicht nachzieht. In diesem Fall bewirkt die Orientierungsschicht, daß der Übergang cholesterischhomöotropnematisch schärfer wird und bei einem etwas geringeren Schwellfeld erfolgt. Auch dadurch ergibt sich ein verbessertes Multiplexverhalten.

Die Polymerschicht läßt sich nicht nur, wie an den geschilderten Beispielen illustriert, bei einer Fülle von Anwendungsfällen einsetzen sondern kann auch in sehr unterschiedlicher Art und Weise erzeugt werden. Dabei wird man im allgemeinen so vorgehen, daß man entweder mesogene Einheiten über flexible Brücken an eine Hauptkette koppelt (Alternative 1) oder Bestandteile der Art [-flexible Brücke-mesogene Einheit] über eine Polymerisation der Brücken miteinander verknüpft (Alternative 2). Auch eine Copolymerisation der Brücken mit weiteren olefinisch ungesättigten Verbindungen ist möglich. Dabei hat man normalerweise die Wahl, die Polymerisations-Reaktion erst auf dem Substrat stattfinden zu lassen oder aber das Reaktionsprodukt aus einer Lösung auf das Substrat aufzubringen.

Bei der Alternative 1 erfolgt die Kopplung gewöhnlich über additions- oder kondensationsfähige chemische Funktionen an den miteinander zu verbindenden Teilen.

Geeignete Kombinationen additionsfähiger Funktionen sind

$—OH + —NCO$     $—NHR(R{=}H, Alkyl) + —NCO$

$—NHR(R{=}H, Alkyl) +$ 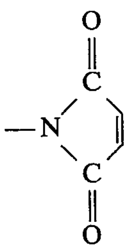

$—NCO + —NCO$     $—CR{=}CH_2(R{=}H, Alkyl) +$ 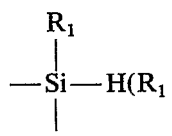 $(R_1 = Alkyl)$

Unter den kondensationsfähigen Funktionen kommen vor allem folgende Kombinationen in Frage

$—OH + —COOR(R{=}H, Alkyl)$     $—OH + —COCl$     $—OH + —CONH_2$

$—OH + —SO_2Cl$     $—OH + —SO_2OR(R{=}H, Alkyl)$

$—OH +$ 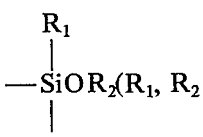 $(R_1, R_2 = Alkyl)$     $—NHR(R{=}H, Alkyl) + —COOR$

$—NHR(R{=}H, Alkyl) + —COCl$     $—NHR(R{=}H, Alkyl) + —CONH_2$

$—NHR(R{=}H, Alkyl) + —SO_2Cl$

$—NHR(R{=}H, Alkyl) + —SO_2OR(R{=}H, Alkyl)$

$—COOR(R{=}H, Alkyl) + —COOR(R{=}H, Alkyl)$

$—COOR(R{=}H, Alkyl) + —COCl$     $—COOR(R{=}H, Alkyl) + —CONH_2$

$—COOH + —NCO$     $—COCl + —CONH_2$

$—CONH_2 + —CONH_2$     $—SO_2Cl + —SO_2OR(R{=}H, Alkyl)$

$—SO_2OR(R{=}H, Alkyl) + —SO_2OR(R{=}H, Alkyl)$

Die flexiblen Brücken bestehen üblicherweise aus Alkylen- oder Alkylenäther-Gruppen.

Im Rahmen der Alternative 2 verläuft die Polymerisation der Brücken über polymerisationsfähige chemische Funktionen P an den Brückenenden nach folgendem Schema:

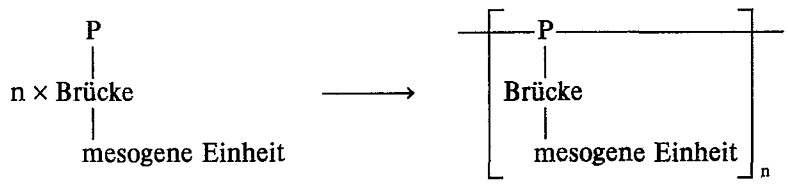

Die Funktion P, die vorzugsweise olefinisch ungesättigt ist, wird in der Regel folgendermaßen beschaffen sein

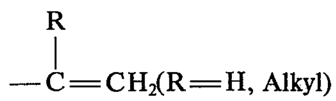

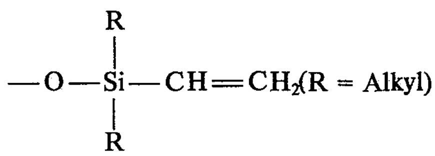

$-CH_2-CH=CH_2$  $-OCH_2-CH=CH_2$

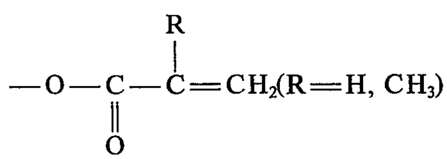

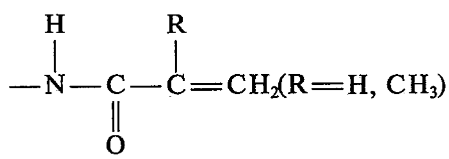

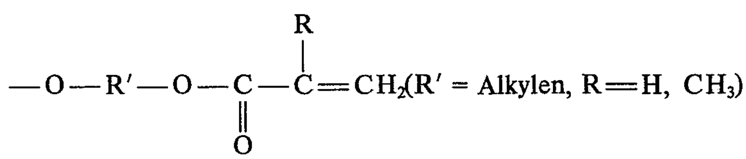

$-C\equiv CH$

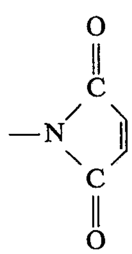

Herstellungsbeispiel 1

Aus 4-Methoxy-4′-hydroxybiphenyl wird durch Umsetzung mit Äthylenchlorhydrin in wäßrig-alkoholischer Kalilauge und anschließender azeotroper Veresterung mit Methacrylsäure in Chloroform, katalysiert durch p-Toluolsulfonsäure, 4-(Methacyloyloxy)äthoxy-4′-methoxybiphenyl hergestellt. Diese Substanz wird in Benzollösung unter Stickstoff in Gegenwart von 1 Molproz. 2,2′-Azoisobutylonitril 8 Stunden auf 65°C erhitzt. Das Reaktionsprodukt wird in Chloroform gelöst und in einem Gemisch von Azeton und Methanol ausgefällt. Eine Lösung des flüssigkristallinen Polymeren in N-Methyl-pyrrolidon wird über eine Gummiwalze auf ein mit einer Leiterbahnstruktur versehenes Glassubstrat aufgebracht und bei 100°C getrocknet.

Herstellungsbeispiel 2

Eine Lösung von 100 g eines Polyamidocarbonesters, der aus Diaminodiphenyläther und Pyromellithsäure-β-hydroxyäthylmethacrylatesterchlorid hergestellt worden ist, 100 g 4-(Methacryloyloxy)äthoxy-4′-methoxybiphenyl, 4 g Michler's Keton und 10 g N-Phenylmaleinimid in N-Methylpyrrolidon wird über eine Gummiwalze auf ein mit einer Leiterbahnstruktur versehenes Glassubstrat aufgebracht, bei 100°C getrocknet und anschließend mit einer 4000-W-Quecksilber-Höchstdrucklampe bestrahlt.

Herstellungsbeispiel 3

Eine Lösung von 100 g Polyamidocarbonsäure, hergestellt aus Diaminodiphenylmethan und Pyromellithsäureanhydrid, 100 g 4-(Methacryloyloxy)äthoxy-4'-methoxy-biphenyl und 1 g 2,2'-Azoisobutyronitril in N-Methylpyrrolidon wird über eine Gummiwalze auf ein mit einer Leiterbahnstruktur versehenes Glassubstrat aufgebracht, anschließend bei 100°C getrocknet und schließlich 30 Minuten auf 2500°C erhitzt.

Herstellungsbeispiel 4

270 g 4-Allyloxybenzoesäure-4'-methoxy-phenylester, hergestellt durch Umsetzung von 4-Allyloxybenzoesäurechlorid mit p-Methoxyphenol, werden mit 55 g eines Poly-oxy(methyl-silylens) mit einem Polymerisationsgrad von 110 in Tetrahydrofuran gelöst; dann werden 100 ppm Hexachlorplatin(IV)-säure als Katalysator zugegeben. Die Lösung wird anschließend 12 Stunden bei 50°C gehalten. Das Reaktionsprodukt wird in Methanol ausgefällt. Eine Lösung mit dem Reaktionsprodukt wird mit einer Walze auf einer mit einer Leiterbahnstruktur versehene Glasplatte aufgetragen und anschließend getrocknet.

Das Display der Figur 2 weicht vom Ausführungsbeispiel der Figur 1 dahingehend ab, daß die Polymerschicht 12 im ausgeschalteten Zustand auch noch als Polarisator fungiert und dementsprechend der Polarisator 4 fehlt. Im übrigen könnte auch der Polarisator 1 weggelassen werden, nämlich dann, wenn man der Trägerplatte 2 oder der Orientierungsschicht 11 polarisierende Eigenschaften gibt. Das dargestellte Display arbeitet als Drehzelle mit zueinander parallelen Polarisatoren, wobei die Polymerschicht 12 bei Anlegen der Schaltspannung das Licht ungeschwächt passieren läßt. Dadurch hat das Licht im eingeschalteten Zustand nur noch einen Polarisator zu durchsetzen und behält somit eine größere Intensität als im Falle einer Drehzelle üblicher Bauweise. (Ein Polarisator polarisiert in der Praxis nie ideal, so daß zwei Polarisatoren in Parallelstellung stets mehr Licht absorbieren als ein einziger Polarisator.)

Eine derart polarisierende Polymerschicht läßt sich beispielsweise dadurch herstellen, daß man einen bestimmten Anteil der mesogenen Einheiten durch eine geeignete Farbstoff-Einheit ersetzt. Die so eingebauten Farbstoffe werden beim Schalten der Orientierungsschicht durch die sich umorientierenden mesogenen Einheiten mitgeführt.

Die Erfindung beschränkt sich nicht auf die dargestellten Ausführungen, da das Prinzip der schaltbaren Orientierungsschicht, die ggf. auch noch als schaltbarer Polarisator wirkt, bei jedem Display-Typ mit vororientierter Flüssigkristallschicht von Vorteil ist. Sowohl bei den Anwendungen als auch bei den Herstellungstechniken besteht ein großer Spielraum, wobei man lediglich darauf zu achten hat, daß die Forderungen des jeweiligen Einzelfalls erfüllt werden. Dabei sind neben der Art und Stärke der Orientierung sowie dem Schaltverhalten auch andere Gesichtspunkte, etwa die Spannungsverteilung zwischen Polymer und Flüssigkristall in den beiden Schaltzuständen oder die mechanischen, thermischen und elektrischen Eigenschaften der Polymerschicht oder das Reflexionsverhalten des Schichtenverbandes, zu berücksichtigen. So ließe sich beispielsweise die Spannungs-Kontrast-Kennlinie noch zusätzlich versteilern, wenn man der Orientierungsschicht in ihren beiden Zuständen geeignet unterschiedliche Widerstände gibt. Die Polymerschicht wird außerordentlich widerstandsfähig gegen mechanische Einwirkungen und Hitzebelastungen, wenn sie aus Vorstufen hochwärmebeständiger Polymere und mesogenen Verbindungen, die polymerisierbare, addierbare oder kondensierbare Gruppen tragen, gemischt ist und ggf. noch Initiatoren, Katalysatoren oder Sensibilisatoren enthält. Und das Display läßt sich durch aufeinander abgestimmte Schichtdicken intern entspiegeln; die hierzu erforderlichen Polymerschichtstärken liegen durchaus noch in dem Bereich, den man wegen der sonst noch verlangten Polymereigenschaften einschalten muß.

**Patentansprüche**

1. Flüssigkristallanzeige mit

1) einer nicht-polymeren Flüssigkristallschicht, die zwischen zwei optisch verschiedenen Zuständen, einem Ruhezustand und einem angeregten Zustand, geschaltet werden kann, und
2) zwei Trägerplatten, die
   a) die Flüssigkristallschicht zwischen sich einschließen und
   b) auf ihren zueinander zugewandten Flächen jeweils einen elektrisch leitfähigen Belag sowie
   c) eine Orientierungsschicht tragen, wobei
   d) zumindest die eine der beiden Orientierungsschichten aus einem Polymer besteht,

dadurch gekennzeichnet, daß

e) die Polymerschicht (11, 12) flüssigkristallin ist und
f) durch Anlegen eines elektrischen Feldes zwischen zwei verschiedenen Orientierungszuständen, einem Aus-Zustand und einem Ein-Zustand, geschaltet werden kann, wobei sie
g) im Aus-Zustand den Ruhezustand der Flüssigkristallschicht (7) erzeugt und im Ein-Zustand den angeregten Zustand der Flüssigkristallschicht (7) zumindest fördert.

2. Flüssigkristallanzeige nach Anspruch 1, bei der auch die Flüssigkristallschicht durch Anlegen eines elektrischen Feldes geschaltet werden kann, dadurch gekennzeichnet, daß sich beim Anlegen und/oder Wegnehmen des elektrischen Feldes zuerst die Flüssigkristallschicht (7) und anschließend die Polymerschicht (11, 12) umorientiert, wobei die Polymerschicht (11, 12) im Aus-Zustand einheitlich plattenparallel und im Ein-Zustand plattensenkrecht orientiert und die Flüssigkristallschicht (7) im Ruhezustand cholesterisch, insbesondere längs der Plattennormalen um 90° verdrillt, und im angeregten Zustand homöotrop nematisch orientiert ist.

3. Flüssigkristallanzeige nach Anspruch 1, bei der auch die Flüssigkristallschicht durch Anlegen eines elektrischen Feldes geschaltet werden kann, dadurch gekennzeichnet, daß sich beim Anlegen und/oder Wegnehmen des elektrischen Feldes zuerst die Flüssigkristallschicht (7) und anschließend die Polymerschicht (11, 12) umorientiert, wobei die Polymerschicht (11, 12) im Aus-Zustand plattensenkrecht und im Ein-Zustand einheitlich plattenparallel orientiert und die Flüssigkristallschicht (7) im angeregten Zustand längs der Plattennormalen um 90° verdrillt ist.

4. Flüssigkristallanzeige nach Anspruch 1, bei der auch die Flüssigkristallschicht durch Anlegen eines elektrischen Feldes geschaltet werden kann, dadurch gekennzeichnet, daß sich beim Anlegen und/oder Wegnehmen des elektrischen Feldes zuerst die Polymerschicht (11, 12) und anschließend die Flüssigkristallschicht (7) umorientiert, wobei die Polymerschicht (11, 12) im Aus-Zustand einheitlich plattenparallel und im Ein-Zustand plattensenkrecht orientiert und die Flüssigkristallschicht (7) im Ruhezustand cholesterisch und im angeregten Zustand homöotrop nematisch orientiert ist.

5. Flüssigkristallanzeige nach Anspruch 1, dadurch gekennzeichnet, daß die Flüssigkristallschicht (7) in ihre beiden Schaltzustände ausschließlich durch die schaltende Polymerschicht (11, 12) gebracht wird.

6. Flüssigkristallanzeige nach einem der Ansprüche 1 bis 6, dadurch gekennzeichnet, daß die Polymerschicht (11, 12) wenigstens in einem ihrer beiden Schaltzustände durchtretendes Licht polarisiert.

7. Flüssigkristallanzeige nach Anspruch 6, dadurch gekennzeichnet, daß eine der beiden Orientierungsschichten eine Polymerschicht (12) ist, die im Aus-Zustand einheitlich plattenparallel orientiert sowie durchtretendes Licht längs des Flüssigkristalldirektors polarisiert und im Ein-Zustand plattensenkrecht orientiert sowie durchtretendes Licht ungeschwächt passieren läßt, daß die Flüssigkristallschicht (7) im Ruhezustand plattenparallel mit einer 90°-Verdrillung in Richtung der Plattennormalen sowie im angeregten Zustand plattensenkrecht orientiert ist und daß sich auf der der Polymerschicht (12) abgewandten Seite der Flüssigkristallschicht ein Polarisator (1) befindet, der parallel zur Polymerschicht (12) in ihrem Aus-Zustand polarisiert.

8. Flüssigkristallanzeige nach einem der Ansprüche 1 bis 7, dadurch gekennzeichnet, daß die Polymerschicht (11, 12) Hauptketten enthält, an die über flexible Brücken mesogene Seitenketten angekoppelt sind, und zwar über Kombinationen additionsfähiger Funktionen aus der folgenden Gruppe:

—OH + —NCO    —NHR(R=H, Alkyl) + —NCO

—NHR(R=H, Alkyl) + 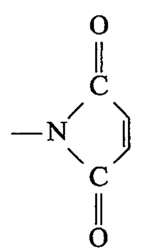

—NCO + —NCO    —CR=$CH_2$(R=H, Alkyl) + 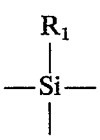—H($R_1$ = Alkyl)

9. Flüssigkristallanzeige nach einem der Ansprüche 1 bis 7, dadurch gekennzeichnet, daß die Polymerschicht (11, 12) Hauptketten enthält, an die über flexible Brücken mesogene Einheiten angekoppelt sind, und zwar über Kombinationen kondensationsfähiger Funktionen aus der folgenden Gruppe:

—OH + —COOR(R=H, Alkyl) —OH + —COCl —OH + —$CONH_2$

—OH + —$SO_2Cl$ —OH + —$SO_2OR$(R=H, Alkyl)

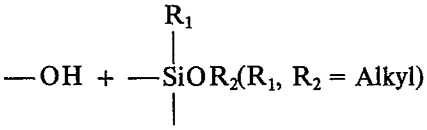 —NHR(R=H, Alkyl) + —COOR

—NHR(R=H, Alkyl) + —COCl —NHR(R=H, Alkyl) + —$CONH_2$

—NHR(R=H, Alkyl) + —$SO_2Cl$

—NHR(R=H, Alkyl) + —$SO_2OR$(R=H, Alkyl)

—COOR(R=H, Alkyl) + —COOR(R=H, Alkyl)

—COOR(R=H, Alkyl) + —COCl —COOR(R=H, Alkyl) + —$CONH_2$

—COOH + —NCO —COCl + —$CONH_2$

—$CONH_2$ + —$CONH_2$ —$SO_2Cl$ + —$SO_2OR$(R=H, Alkyl)

—$SO_2OR$(R=H, Alkyl) + —$SO_2OR$(R=H, Alkyl)

10. Flüssigkristallanzeige nach einem der Ansprüche 1 bis 7, dadurch gekennzeichnet, daß die Polymerschicht (11, 12) aus Bestandteilen mit der Struktur [-flexible Brücke- mesogene Einheit] besteht, wobei die Brücken über chemische Funktionen aus der folgenden Gruppe:

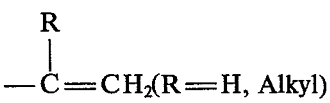 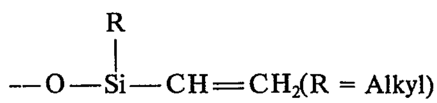

—$CH_2$—CH=$CH_2$ —$OCH_2$—CH=$CH_2$

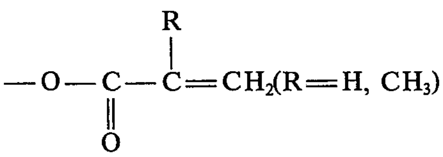 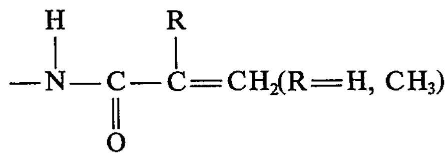

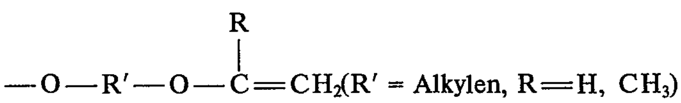

—C≡CH 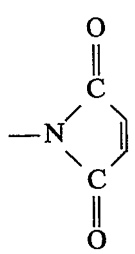

miteinander polymerisiert sind.

11. Flüssigkristallanzeige nach einem der Ansprüche 8 bis 10, dadurch gekennzeichnet, daß die flexiblen Brücken Alkylen- oder Alkylenätherketten sind.

12. Flüssigkristallanzeige nach einem der Ansprüche 1 bis 11, dadurch gekennzeichnet, daß die Dicken der Polymerschicht (11, 12) und der übrigen Trägerplattenschichten so aufeinander abgestimmt sind, daß die Flüssigkristallanzeige intern entspiegelt ist.

13. Verfahren zur Herstellung einer Flüssigkristallanzeige gemäß einem der Ansprüche 1 bis 12,

dadurch gekennzeichnet, daß zunächst die monomeren, vorzugsweise noch mit hochwärmebeständigen Polymeren gemischten Verbindungen auf das Substrat aufgebracht und anschließend polymerisiert werden.

14. Verfahren zur Herstellung einer Flüssigkristallanzeige nach einem der Ansprüche 1 bis 12, dadurch gekennzeichnet, daß zunächst die Polymerisation durchgeführt wird und dann die Polymerisationsprodukte, die man vorzugsweise noch mit hochwärmebeständigen Polymeren mischt, aus der Lösung auf das Substrat aufgebracht werden.

**Claims**

1. A liquid crystal display comprising

1) a non-polymeric liquid crystal layer which can be switched between two optically different states, a rest state and an excited state, and
2) two carrier plates which
   a) enclose the liquid crystal layer between them, and
   b) on their mutually facing surfaces carry both an electrically conductive coating, and
   c) an orientation layer, where
   d) at least one of the two orientation layers consists of a polymer,

characterised in that

e) the polymer layer (11, 12) is liquid-crystalline, and
f) by applying an electric field, switching can be effected between two different orientation states, an off-state and an on-state, where it (the polymer layer)
g) produces the rest state of the liquid crystal layer (7) in the off-state, and at least promotes the excited state of the liquid crystal layer (7) in the on-state.

2. A liquid crystal display according to Claim 1, wherein the liquid crystal layer can also be switched by applying an electric field, characterised in that when applying and/or removing the electric field, first the liquid crystal layer (7) and subsequently the polymer layer (11, 12) is re-orientated, the polymer layer (11, 12) being orientated so as to be uniformly parallel to the plates in the off-state and at right angles to the plates in the on-state; and the liquid crystal layer (7) is orientated so as to be cholesteric in the rest state, in particular twisted through 90° along the normal to the plate, and in the excited state is orientated so as to be homotropically nematic.

3. A liquid crystal display according to Claim 1, wherein the liquid crystal layer can also be switched by applying an electric field, characterised in that when applying and/or removing the electric field, first the liquid crystal layer (7) and subsequently the polymer layer (11, 12) is re-orientated, the polymer layer (11, 12) being orientated so as to be at right angles to the plate in the off-state and uniformly parallel to the plate in the on-state; and in the excited state, the liquid crystal layer (7) is twisted through 90° along the normal to the plate.

4. A liquid crystal display according to Claim 1, wherein the liquid crystal layer can also be switched by applying an electric field, characterised in that when applying and/or removing the electric field, first the polymer layer (11, 12) and subsequently the liquid crystal layer (7) is re-orientated, the polymer layer (11, 12) being orientated sc as to be uniformly parallel to the plate in the off-state and at right angles to the plate in the on-state; and the liquid crystal layer (7) is orientated so as to be cholesteric in the rest state and to be homotropically nematic in the excited state.

5. A liquid crystal display according to Claim 1, characterised in that the liquid crystal layer (7) is exclusively brought into its two switching states by the switching polymer layer (11, 12).

6. A liquid crystal display according to one of Claims 1 to 6, characterised in that the polymer layer (11, 12) polarizes light passing through it, in at least one of its two switching states.

7. A liquid crystal display according to Claim 6, characterised in that one of the two orientation layers is a polymer layer (12) which, in the off-state, is orientated so as to be uniformly parallel to the plate and polarizes light passing through along the liquid crystal director, and which, in the on-state, is orientated so as to be at right angles to the plate and allows light passing through to pass unchanged; that, in the rest state, the liquid crystal layer (7) is orientated so as to be parallel to the plate with 90°-twist in the direction of the normal to the plate and, in the excited state, is orientated at right angles to the plate; and that on the side of the liquid crystal layer facing away from the polymer layer (12), there is arranged a polarizer (1) which polarizes parallel to the polymer layer (12) in its off-state.

8. A liquid crystal display according to one of Claims 1 to 7, characterised in that the polymer layer (11, 12) comprises main chains, to which mesogenic side chains are coupled by means of flexible bridges, namely by combinations of functional groups capable of addition, from the following group:

—OH + —NCO    —NHR(R=H, Alkyl) + —NCO

—NHR(R=H, Alkyl) + 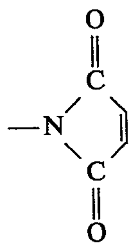

—NCO + —NCO    —CR=$CH_2$(R=H, Alkyl) + 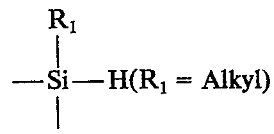

9. A liquid crystal display according to one of Claims 1 to 7, characterised in that the polymer layer (11, 12) comprises main chains, to which mesogenic units are coupled by means of flexible bridges, namely by combinations of functional groups capable of condensation, from the following group:

—OH + —COOR(R=H, Alkyl)    —OH + —COCl    —OH + —$CONH_2$

—OH + —$SO_2Cl$    —OH + —$SO_2OR$(R=H, Alkyl)

—OH + 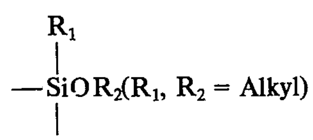    —NHR(R=H, Alkyl) + —COOR

—NHR(R=H, Alkyl) + —COCl    —NHR(R=H, Alkyl) + —$CONH_2$

—NHR(R=H, Alkyl) + —$SO_2Cl$

—NHR(R=H, Alkyl) + —$SO_2OR$(R=H, Alkyl)

—COOR(R=H, Alkyl) + —COOR(R=H, Alkyl)

—COOR(R=H, Alkyl) + —COCl    —COOR(R=H, Alkyl) + —$CONH_2$

—COOH + —NCO    —COCl + —$CONH_2$

—$CONH_2$ + —$CONH_2$    —$SO_2Cl$ + —$SO_2OR$(R=H, Alkyl)

—$SO_2OR$(R=H, Alkyl) + —$SO_2OR$(R=H, Alkyl)

10. A liquid crystal display according to one of Claims 1 to 7, characterised in that the polymer layer (11, 12) consists of components having the structure [-flexible bridge- mesogenic unit], the bridges being polymerized with one another by means of chemical functional groups from the following group:

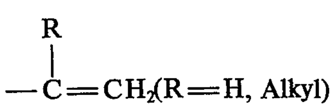    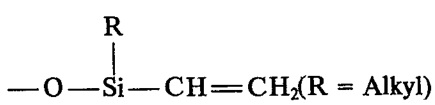

—$CH_2$—CH=$CH_2$    —$OCH_2$—CH=$CH_2$

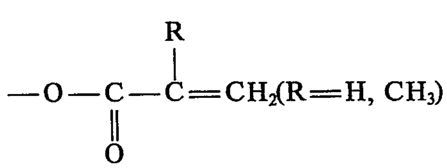    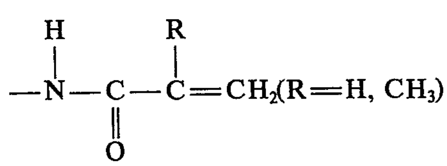

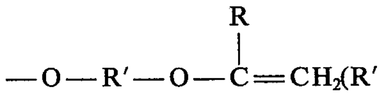 (R' = Alkylen, R=H, $CH_3$)

$—C\equiv CH$ 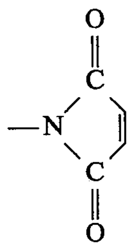

11. A liquid crystal display according to one of Claims 8 to 10, characterised in that the flexible bridges are alkylene or alkylene ether chains.

12. A liquid crystal display according to one of Claims 1 to 11, characterised in that the thicknesses of the polymer layer (11, 12) and the remaining carrier plate layers are so adjusted to one another that the liquid crystal display is internally non-reflected.

13. A process for the production of a liquid crystal display according to one of Claims 1 to 12, characterised in that the monomeric compounds, preferably mixed with highly heat-resistant polymers, are first applied to the substrate and subsequently polymerized.

14. A process for the production of a liquid crystal display according to one of Claims 1 to 12, characterised in that the polymerization is first carried out and the polymerization products, which are preferably mixed with highly heat-resistant polymers, are subsequently applied to the substrate from solution.

**Revendications**

1. Dispositif d'affichage à cristal liquide comportant

1) une couche de cristal liquide non polymère, qui peut être commutée entre deux états différents du point de vue optique, à savoir un état de repos et un état excité, et
2) deux plaques de support qui,
   a) enserrent entre elles la couche de cristal liquide, et
   b) portent sur leurs surfaces tournées l'une vers l'autre, respectivement une couche respectivement conductrice et
   c) une couche d'orientation,
   d) au moins l'une des deux couches d'orientation étant constituée par un polymère, caractérisé par le fait que,
   e) la couche de polymere (11, 12) possède le caractère du cristal liquide, et
   f) elle peut être commutée, par application d'un champ électrique, entre deux états différents d'orientation, à savoir un état débranché et un état branché,
   g) la couche provoquant, à l'état débranché la mise à l'état de repos de la couche de cristal liquide (7) et favorisant, à l'état branché au moins l'apparition de l'état excité de la couche de cristal liquide (7).

2. Dispositif d'affichage à cristal liquide suivant la revendication 1, dans lequel également la couche de cristal liquide peut être commutée par application d'un champ électrique, caractérisé par le fait que lors de l'application et/ou de la suppression du champ électrique, il se produit une modification de l'orientation tout d'abord de la couche de cristal liquide (7) et ensuite de la couche de polymère (11, 12), la couche de polymère (11, 12) étant orientée, à l'état débranché, uniformément parallèlement aux plaques et, à l'état branché, perpendiculairement aux plaques et la couche de cristal liquide (7) étant orientée, à l'état de repos, selon la configuration cholestérique, en étant notament torsadée à 90° le long de la normale aux plaques, et étant orientée, à l'état excité, avec la configuration nématique homéotrope.

3. Dispositif d'affichage à cristal liquide suivant la revendication 1, dans lequel également la couche de cristal liquide peut être commuté par application d'un champ électrique, caractérisé par le fait que lors de l'application et/ou de la suppression du champ électrique, il se produit tout d'abord une modification de l'orientation de la couche de cristal liquide (7), puis de la couche de polymère (11, 12), la couche de polymère (11, 12) étant orientée, à l'état débranché, perpendiculairement aux plaques et, à l'état branché, uniformément parallèlement aux plaques, tandis que la couche de cristal liquide (7) est torsadée à 90° le long de la normale aux plaques, à l'état excité.

4. Dispositif d'affichage à cristal liquide suivant la revendication 1, dans lequel également le cristal liquide peut être commuté par application d'un champ électrique, caractérisé par le fait que lors de

l'application et/ou de la suppression du champ électrique, il se produit une modification de l'orientation tout d'abord de la couche de polymère (11,12) puis de la couche de cristal liquide (17), la couche de polymère (11,12) étant orientée, à l'état débranché, uniformément parallèlement aux plaques et, à l'état branché, perpendiculairement aux plaques et la couche de cristal liquide (7) possédant une orientation de type chlolestérique à l'état de repos et de nature nématique homéotrope à l'état excité.

5. Dispositif d'affichage à cristal liquide suivant la revendication 1, caractérisé par le fait que la couche de cristal liquide (7) est placée dans ses deux états de commutation, exclusivement par les couches de polymère (11,12) réalisant la commutation.

6. Dispositif d'affichage à cristal liquide suivant l'une des revendications 1 à 6, caractérisé par le fait que dans l'un de ses deux états de commutation, la couche de polymère (11,12) polarise une lumière transmise.

7. Dispositif d'affichage à cristal liquide suivant la revendication 6, caractérisé par le fait que l'une des deux couches d'orientation est une couche de polymère (12) qui, à l'état débranché, prend une orientation uniformément parallèle aux plaques et polarise une lumière transmise, suivant le sens directeur du cristal liquide et qui, à l'état branché, prend une orientation perpendiculaire aux plaques et laisser passer sans affaiblissement une lumière transmise, que la couche de cristal liquide (7) est, à l'état de repos, orientée parallèlement aux plaques avec une torsion à 90° suivant la direction de la normale aux plaques et, à l'état excité, est orientée perpendiculairement aux plaques, et que sur la face de la couche à cristal liquide tournée à l'opposé de la couche de polymère (12), et se trouve situé un polariseur (1) qui dans son étant débranché, réalise une polarisation parallèlement à la couche de polymère (12).

8. Dispositif d'affichage à cristal liquide suivant l'une des revendications 1 à 7, caractérisé par le fait que la couche de polymère (11,12) contient des chaînes principales auxquelles des chaînes latérales mésogènes sont raccordées par l'intermédiaire de ponts flexibles, et ce par l'intermédiaire de combinaisons de fonctions permettant des additions et choisies dans le groupe suivant:

$-OH + -NCO \qquad -NHR(R{=}H, \text{alcoyle}) + -NCO$

$-NHR(R{=}H, \text{alcoyle}) + -$ 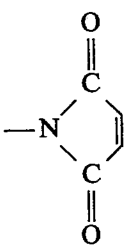

$-NCO + -NCO \qquad -CR{=}CH_2(R{=}H, \text{alcoyle}) + -$ 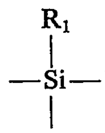 $(R_1 = \text{alcoyle})$

9. Dispositif d'affichage à cristal liquide suivant l'une des revendications 1 à 7, caractérisé par le fait que la couche de polymère (11,12) contient des chaînes principales auxquelles des unités mésogènes sont accouplées par l'intermédiaire de ponts flexibles, et ce par l'intermédiaire de combinaisons de fonctions aptes à réaliser une condensation et choisies dans le groupe suivant:

$-OH + -COOR(R{=}H, \text{alcoyle}) \qquad -OH + -COCl \qquad -OH + -CONH_2$

$-OH + -SO_2Cl \qquad -OH + -SO_2OR(R{=}H, \text{alcoyle})$

$-OH + -$ 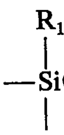 $OR_2(R_1, R_2 = \text{alcoyle}) \qquad -NHR(R{=}H, \text{alcoyle}) + -COOR$

$-NHR(R{=}H, \text{alcoyle}) + -COCl \qquad -NHR(R{=}H, \text{alcoyle}) + -CONH_2$

$-NHR(R{=}H, \text{alcoyle}) + -SO_2Cl$

$-NHR(R{=}H, \text{alcoyle}) + -SO_2OR(R{=}H, \text{alcoyle})$

$-COOR(R{=}H, \text{alcoyle}) + -COOR(R{=}H, \text{alcoyle})$

$-COOR$(R=H, alcoyle) + $-COCl$ $-COOR$(R=H, alcoyle) + $-CONH_2$

$-COOH$ + $-NCO$ $-COCl$ + $-CONH_2$

$-CONH_2$ + $-CONH_2$ $-SO_2Cl$ + $-SO_2OR$(R=H, alcoyle)

$-SO_2OR$(R=H, alcoyle) + $-SO_2OR$(R=H, alcoyle)

10. Dispositif d'affichage à cristal liquide suivant l'une des revendications 1 à 7, caractérisé par le fait que la couche de polymère (11,12) est constitué par des composants possédant la structure [-pont flexible-unité mésogène], les ponts étant polymérisés entre eux par l'intermédiaire de fonctions chimiques choisies dans le groupe suivant:

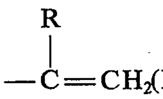 (R=H, alcoyle) 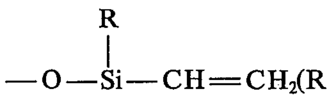 (R = alcoyle)

$-CH_2-CH=CH_2$ $-OCH_2-CH=CH_2$

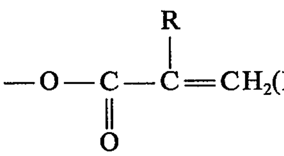 $(R=H, CH_3)$ 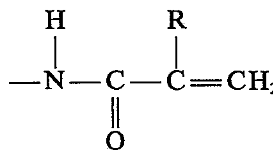 $(R=H, CH_3)$

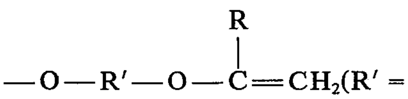 (R' = alkylène, $R=H, CH_3$)

$-C\equiv CH$ 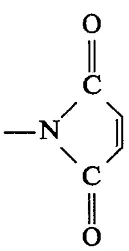

11. Dispositif d'affichage à cristal liquide suivant l'une des revendications 8 à 10, caractérisé par le fait que les ponts flexibles sont des chaînes d'alcoylènes ou d'éthers d'alcoylènes.

12. Dispositif d'affichage à cristal liquide suivant l'une des revendications 1 à 11, caractérisé par le fait que les épaisseurs de la couche de polymère (11,12) et des autres couches des plaques de support sont réglées les unes sur les autres de telle sorte que le dispositif d'affichage à cristal liquide présente une caractéristique anti-reflet interne.

13. Procédé pour fabriquer un dispositif d'affichage à cristal liquide suivant l'une des revendications 1 à 12, caractérisé par le fait qu'on dépose tout d'abord sur le substrat les composés monomères mélangés de préférence également à des polymères hautement résistants à la chaleur, et qu'on les polymérise ensuite.

14. Procédé pour fabriquer un dispositif d'affichage à cristal liquide suivant l'une des revendications 1 à 12, caractérisé par le fait qu'on réalise tout d'abord la polymérisation et qu'on dépose ensuite sur le substrat, à partir de la solution, les produits de polymérisation que l'on mélange de préférence également à des polyméres fortement résistants à la chaleur.

FIG 1

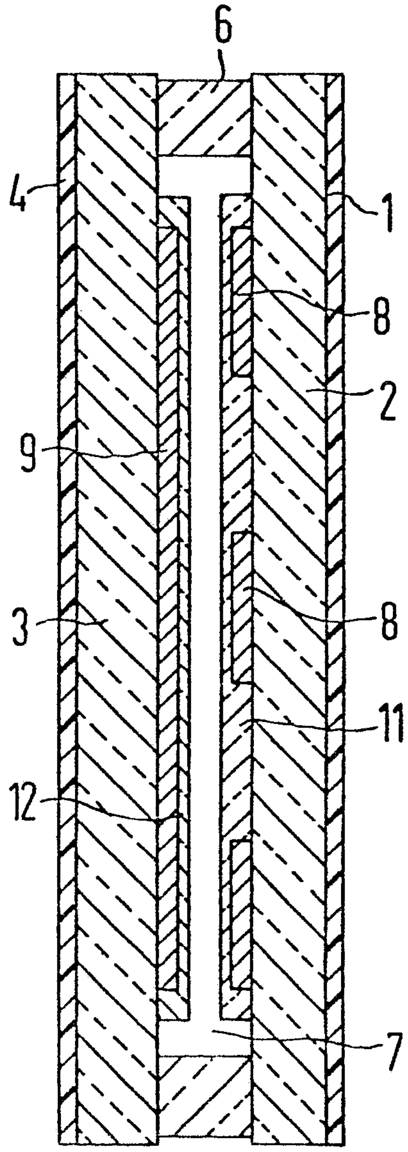


FIG 2